# EUROPÄISCHE PATENTANMELDUNG

(11) **EP 4 844 077 A1**
(43) Veröffentlichungstag der Anmeldung: **25.11.2026**
(21) Anmeldenummer: 25189649.4
(22) Anmeldetag: 15.07.2025
(51) Int. Cl.: C13B 10/00, B01D 3/34, B01D 19/04, C12M 1/21, G01F 3/36, G01F 3/38, G01N 1/02, G01N 1/10, G01N 7/00, G01N 29/02

(54) **VORRICHTUNG UND VERFAHREN ZUR AUTOMATISIERTEN ZUGABE EINES SCHAUMDÄMPFUNGSMITTELS ZU EINEM STRÖMENDEN MEDIUM UND ZUCKERPRODUKTIONSANLAGE**

(30) Priorität: 19.05.2025 EP 25177326
(71) Anmelder: Pfeifer & Langen IP GmbH, 50858 Köln (DE)
(72) Erfinder: Burkhardt, Mark-Oliver, 50585 Köln (DE); Klosterhalfen, Wolfgang, 50585 Köln (DE); Abraham, Karin, 50585 Köln (DE)
(74) Vertreter: Kutzenberger Wolff & Partner

(57) **Zusammenfassung**

Die vorliegende Erfindung betrifft eine Vorrichtung (1) zur automatisierten Zugabe eines Schaumdämpfungsmittels (4) zu einem strömenden Medium, insbesondere zu einem strömenden Zuckersaft oder Zuckersirup, aufweisend einen Rohrleitungsabschnitt (2) zum Führen des strömenden Mediums, einen mit dem Rohrleitungsabschnitt (2) verbindbaren Behälter (7), in welchen ein Testvolumen des strömenden Mediums einbringbar ist, um in dem Behälter (7) ein stehendes Medium zu erhalten, eine Gaszuführeinrichtung (8), durch welche ein vorgegebenes Volumen eines Gases oder eines Gasgemisches (9), insbesondere Luft, in das stehende Medium in dem Behälter (7) einführbar ist, um die Bildung eines Schaums in dem stehenden Medium zu fördern, eine Erfassungseinrichtung (10) zum Erfassen von Messdaten (12), die den Schaum des stehenden Mediums betreffen, eine Schaumdämpfungsmittel-Zuführeinrichtung (3) zum Zuführen eines Schaumdämpfungsmittels (4) zu dem strömenden Medium in Abhängigkeit von den erfassten Messdaten (12) und/oder einem zeitlichen Verlauf der erfassten Messdaten (12). Die Erfindung betrifft ferner eine Zuckerproduktionsanlage mit einer Einrichtung, die dazu eingerichtet ist, ein als Zuckersaft (114-127) oder Zuckersirup ausgebildetes strömendes Medium bereitzustellen oder weiterzuverarbeiten, mit einer Vorrichtung zur automatisierten Zugabe eines Schaumdämpfungsmittels (4) zu dem strömenden Medium.

## Beschreibung

### Stand der Technik

Die vorliegende Erfindung betrifft eine Vorrichtung zur automatisierten Zugabe eines Schaumdämpfungsmittels zu einem strömenden Medium, insbesondere zu einem strömenden Zuckersaft oder Zuckersirup. Ferner betrifft die Erfindung eine Zuckerproduktionsanlage mit einer Einrichtung, die dazu eingerichtet ist, ein als Zuckersaft oder Zuckersirup ausgebildetes strömendes Medium bereitzustellen oder weiterzuverarbeiten. Weiterhin betrifft die Erfindung ein Verfahren zur automatisierten Zugabe eines Schaumdämpfungsmittels zu einem strömenden Medium, insbesondere zu einem strömenden Zuckersaft oder Zuckersirup.

In der Zuckerproduktion, sowohl ausgehend von Zuckerrohr als auch ausgehend von Zuckerrüben, liegen als Zwischenprodukte verschiedene Zuckersäfte und Zuckersirupe vor. Diese werden in und zwischen einzelnen Prozessschritten der Zuckerproduktion als strömende Medien, z.B. in Rohrleitungen, geführt. Bestimmte Inhaltsstoffe der Zuckersäfte und Zuckersirupe aber auch des zum Transport von Rüben verwendeten Schwemmwassers führen, beispielsweise aufgrund von chemischen Vorgängen und/oder der Bewegung des Mediums, zu einer Schaumbildung. Diese Schaumbildung ist generell unerwünscht, da das Vorhandensein von Schaum verschiedene Prozessschritte der Zuckerproduktion negativ beeinflussen kann.

Um dieser Schaumbildung entgegenzuwirken, ist es bekannt, sogenannte Schaumdämpfungsmittel einzusetzen. Diese können Schaum durch eine Reduktion der Oberflächenspannung und/oder durch Einbringen eines Fremdstoffs, wie etwa Wachs, zerstören. Schaumdämpfungsmittel können dem Schwemmwasser oder den Zwischenprodukten der Zuckerproduktion zugesetzt werden und dadurch das Ausmaß der Schaumbildung regulieren. Bisher erfolgt die Dosierung solcher Schaumdämpfungsmittel in der Zuckerproduktion über eine manuelle Einstellung von Dosierungspumpen und basiert auf der subjektiven visuellen Beobachtung des jeweiligen Produktionsmitarbeiters. Dabei kommt es oftmals zu unerwünschten Fehldosierungen, so dass die Schaumbildung entweder aufgrund einer Unterdosierung nicht ausreichend eingedämmt wird oder aufgrund einer Überdosierung zu große Mengen an Schaumdämpfungsmittel eingesetzt werden. Ferner ist es oftmals nicht möglich, ausreichend schnell auf variierende Bedingungen in dem strömenden Medium zu reagieren, da eine lückenlose Überwachung des strömenden Mediums durch den Produktionsmitarbeiter nur unter großem Aufwand zu verwirklichen ist.

### Offenbarung der Erfindung

Vor diesem Hintergrund ist es **Aufgabe** der vorliegenden Erfindung, eine effiziente Hemmung der Schaumbildung in strömenden Medien, insbesondere bei der Zuckerproduktion, auch unter variierenden Bedingungen zu ermöglichen.

Zur **Lösung** der Aufgabe wird eine Vorrichtung zur automatisierten Zugabe eines Schaumdämpfungsmittels zu einem strömenden Medium, insbesondere zu einem strömenden Zuckersaft oder Zuckersirup, aufweisend einen Rohrleitungsabschnitt zum Führen des strömenden Mediums, einen mit dem Rohrleitungsabschnitt verbindbaren Behälter, in welchen ein Testvolumen des strömenden Mediums einbringbar ist, um in dem Behälter ein stehendes Medium zu erhalten, eine Gaszuführeinrichtung, durch welche ein vorgegebenes Volumen eines Gases oder eines Gasgemisches, insbesondere Luft, in das stehende Medium in dem Behälter einführbar ist, um die Bildung eines Schaums in dem stehenden Medium zu fördern, eine Erfassungseinrichtung zum Erfassen von Messdaten, die den Schaum des stehenden Mediums betreffen, eine Schaumdämpfungsmittel-Zuführeinrichtung zum Zuführen eines Schaumdämpfungsmittels zu dem strömenden Medium in Abhängigkeit von den erfassten Messdaten und/oder einem zeitlichen Verlauf der erfassten Messdaten.

Die erfindungsgemäße Vorrichtung ermöglicht die automatisierte Dosierung des Schaumdämpfungsmittels zu dem strömenden Medium in Abhängigkeit von Messdaten, die an einem dem Prozess entnommenen, stehenden Medium ermittelt werden. Hierzu kann mit der Vorrichtung ein Testvolumen des strömenden Mediums aus dem Rohrabschnitt abgezweigt und in den Behälter verbracht werden. Dieser Behälter kann von dem strömenden Medium derart entkoppelt werden, dass das Medium steht, d.h. nicht strömt. In das stehende Medium kann über die Gaszuführvorrichtung ein Gas oder eine Gasmischung, beispielsweise Luft, eingeführt werden. Hierdurch wird die Bildung eines Schaums in dem stehenden Medium gefördert. Die durch die Gaszuführvorrichtung initiierte bzw. geförderte Schaumbildung in dem stehenden Medium kann durch die Erfassungsvorrichtung quantifiziert werden. Dabei werden die durch die Erfassungsvorrichtung erfassten Messdaten und bevorzugt ein zeitlicher Verlauf dieser Messdaten herangezogen, um das Zuführen eines Schaumdämpfungsmittels durch die Schaumdämpfungsmittel-Zuführeinrichtung zu steuern. Insbesondere bei variierenden Bedingungen kann die erfindungsgemäße Vorrichtung zuverlässig reagieren und die Dosierung des Schaumdämpfungsmittels mit geringer Latenz nachstellen.

Das strömende Medium kann beispielswiese ein strömender Zuckersaft oder ein strömender Zuckersirup sein oder ein strömendes Schwemmwasser oder ein strömender Ablauf, also eine beim Zentrifugieren abgeschleuderte Mutterlauge, sein.

Bevorzugt ist der Behälter in einer mit der Rohrleitung verbundenen Bypass-Leitung angeordnet. Bei einer derartigen Ausgestaltung kann das Testvolumen aus dem strömenden Medium abgezweigt werden und das übrige Medium kann in der Rohrleitung an der Bypass-Leitung und damit auch an dem Behälter vorbeiströmen. Hierdurch wird nur eine geringe Menge des strömenden Mediums zur Analyse benötigt und gleichfalls ein Nachstellen der Dosierung des Schaumdämpfungsmittels mit geringer Latenz bei laufendem Prozess bzw. laufender Produktion ermöglicht.

Bevorzugt umfasst die Gaszuführeinrichtung eine Gaslanze oder einen Gasinjektor oder eine perforierte Gasleitung. Bevorzugt umfasst die Gaszuführeinrichtung mehrere Gaslanzen oder mehrere Gasinjektoren oder mehrere perforierte Gasleitungen. Die Gaszuführeinrichtung kann eine Mündung aufweisen, die in dem stehenden Medium, d.h. unterhalb der Oberfläche des stehenden Mediums angeordnet wird, um das Gas oder das Gasgemisch unmittelbar in das stehende Medium abgeben zu können. Alternativ kann die Gaszuführeinrichtung mindestens eine Düse, insbesondere eine Einperldüse, aufweisen. Beispielsweise können mehrere Düsen an einer Gasleitung vorgesehen sein.

Bevorzugt ist vorgesehen, dass der Behälter einen Boden aufweist und die Gaszuführvorrichtung im Bereich des Bodens des Behälters angeordnet ist. Eine derartige Ausgestaltung ermöglicht es, dass durch die Gaszuführvorrichtung in dem stehenden Medium erzeugte Gasbläschen in dem stehenden Medium nach oben aufsteigen können und dadurch ein möglichst großes Volumen des stehenden Mediums mit Gas beaufschlagt werden kann.

Der Behälter umfasst bevorzugt eine Auslassöffnung, die im Bereich eines Bodens des Behälters angeordnet ist. Hierdurch wird ein vollständiges Entleeren des Behälters durch die Auslassöffnung in Richtung der Schwerkraft ermöglicht. Bevorzugt weist der Behälter zusätzlich eine Einlassöffnung auf. Die Einlassöffnung ist bevorzugt oberhalb der Auslassöffnung angeordnet, so dass der Behälter bis zu einem durch die Anordnung der Einlassöffnung vorgegebenen Füllniveau gefüllt werden kann. Die Gaszuführvorrichtung ist bevorzugt im Bereich des Bodens aber oberhalb der Auslassöffnung und unterhalb der Einlassöffnung angeordnet.

Gemäß einer vorteilhaften Ausgestaltung der Erfindung ist vorgesehen, dass der Rohrleitungsabschnitt mit dem Behälter über ein steuerbares Ventil verbunden ist und das steuerbare Ventil derart zwischen der Schaumdämpfungsmittel-Zuführeinrichtung und dem Behälter angeordnet ist, dass strömendes Medium, welches die Schaumdämpfungsmittel-Zuführeinrichtung passiert hat, bei geöffnetem Ventil in den Behälter geführt werden kann. Insofern ist das steuerbare Ventil stromabwärts der Schaumdämpfungsmittel-Zuführeinrichtung angeordnet. Bei einer derartig ausgestalteten Vorrichtung kann das strömende Medium, welches mit dem Schaumdämpfungsmittel beaufschlagt ist, dem Behälter zur Messung zugeführt werden. Bei geschlossenem Ventil kann das Einströmen des Mediums in den Behälter unterbunden werden, so dass in dem Behälter ein stehendes Medium erhalten werden kann. Alternativ kann vorgesehen sein, dass der Rohrleitungsabschnitt mit dem Behälter über ein steuerbares Ventil verbunden ist und das steuerbare Ventil derart zwischen dem Behälter und der Schaumdämpfungsmittel-Zuführeinrichtung angeordnet ist, dass strömendes Medium, welches bei geschlossenem Ventil das Ventil und den Behälter passiert hat, die Schaumdämpfungsmittel-Zuführeinrichtung erreicht. Insofern ist das steuerbare Ventil stromaufwärts der Schaumdämpfungsmittel-Zuführeinrichtung angeordnet.

Gemäß einer vorteilhaften Ausgestaltung der Erfindung ist vorgesehen, dass die Vorrichtung eine Steuereinrichtung aufweist, die dazu eingerichtet ist, eine Menge des durch die Schaumdämpfungsmittel-Zuführeinrichtung zugeführten Schaumdämpfungsmittels und/oder eine Zusammensetzung des durch die Schaumdämpfungsmittel-Zuführeinrichtung zugeführten Schaumdämpfungsmittels in Abhängigkeit von den erfassten Messdaten und/oder dem zeitlichen Verlauf der erfassten Messdaten einzustellen. Eine derartige Ausgestaltung ermöglich es die Dosierung und/oder Zusammensetzung des Schaumdämpfungsmittels auf die Eigenschaften des in dem Rohrabschnitt strömenden Mediums anhand des Testvolumens einzustellen. Die Menge des zuzuführenden Schaumdämpfungsmittels kann als ein Volumen oder eine Masse angegeben werden. Zum Einstellen der Menge des zuzuführenden Schaumdämpfungsmittels kann die Schaumdämpfungsmittel-Zuführeinrichtung für eine gewisse Dauer zum Zuführen es Schaumdämpfungsmittels, insbesondere periodisch, geöffnet werden und/oder es kann eine Durchflussmenge der Schaumdämpfungsmittel-Zuführeinrichtung eingestellt werden. Das Einstellen der Zusammensetzung des zuzuführenden Schaumdämpfungsmittels kann durch Mischen vorgegebener Mengen mehrerer Bestandteile mit einer Mischvorrichtung erfolgen. Die Bestandteile können in mit der Mischvorrichtung verbundenen Vorratsbehältern bevorratet sein. Alternativ ist es möglich, die Zusammensetzung des zuzuführenden Schaumdämpfungsmittels dadurch einzustellen, dass Schaumdämpfungsmittel aus mehrere vorgegebenen Schaumdämpfungsmitteln ausgewählt wird. Diese vorgegebenen Schaumdämpfungsmittel können in entsprechenden Vorratsbehältern vorgehalten sein. Die Steuereinrichtung kann eine programmgesteuerte Steuereinrichtung sein. Alternativ ist es möglich, dass die Steuereinrichtung ein trainiertes und validiertes System des maschinellen Lernens ist.

Sofern die Vorrichtung ein steuerbares Ventil umfasst, über welches der Rohrleitungsabschnitt mit dem Behälter verbunden ist, ist die Steuereinrichtung bevorzugt dazu eingerichtet, das steuerbare Ventil anzusteuern. Die Steuereinrichtung kann dann sowohl das Einleiten des Mediums in dem Behälter initiieren als auch die Dosierung des Schaumdämpfungsmittels in Abhängigkeit von den Messdaten steuern.

Bevorzugt ist die Steuereinrichtung ferner dazu eingerichtet, die Gaszuführeinrichtung anzusteuern. Eine derartig ausgestaltete Steuereinrichtung kann sowohl das Einführen des Gases bzw. der Gasmischung in das stehende Medium als auch die Dosierung des Schaumdämpfungsmittels in Abhängigkeit von den während dem Einführen und ggf. danach erfassten Messdaten steuern.

Gemäß einer vorteilhaften Ausgestaltung der Erfindung ist vorgesehen, dass die Erfassungsvorrichtung eine optische Erfassungseinheit, insbesondere eine Kamera, umfasst. Die optische Erfassungseinheit ist insbesondere im sichtbareren Bereich des Spektrums empfindlich. Die optische Erfassungseinheit ist bevorzugt derart angeordnet, dass eine Querschnittsansicht des in dem Behälter stehen Mediums parallel zu einer Oberfläche des Mediums erfassbar ist. Insofern kann die optische Erfassungseinheit seitlich der Oberfläche des stehenden Mediums, insbesondere hinter einem transparenten Fenster, beispielsweise einem Schauglas, des Behälters angeordnet sein. Die Erfassungsvorrichtung kann eine Einrichtung zur Erzeugung eine Hintergrundbeleuchtung aufweisen. Die Einrichtung zur Erzeugung eine Hintergrundbeleuchtung kann als Gegenlichteinrichtung ausgebildet sein. Sofern die optische Erfassungseinheit seitlich der Oberfläche des stehenden Mediums angeordnet ist, kann die Gegenlichteinrichtung ebenfalls seitlich der Oberfläche des stehenden Mediums aber der optischen Erfassungseinheit gegenüberliegend angeordnet sein. Beispielsweise können die optische Erfassungseinheit und die Gegenlichteinrichtung jeweils hinter einem transparenten Fenster angeordnet sein, wobei die Fenster derart gegenüberliegend angeordnet sind, dass das strömende Medium zwischen dem Fenstern hindurchströmen kann. Vorteilhaft ist es, wenn die Erfassungsvorrichtung mehrere optische Erfassungseinheiten aufweist, beispielsweise zwei oder drei Kameras. Die mehrere optischen Erfassungseinheiten können das stehende Medium von unterschiedlichen Perspektiven, insbesondere von unterschiedlichen Seiten des stehenden Mediums aus, aufnehmen. Beispielsweise kann eine erste optische Erfassungseinheit seitlich des stehenden Mediums angeordnet sein und eine zweite optische Erfassungseinheit oberhalb des stehenden Mediums angeordnet sein. Die erste optische Erfassungseinheit kann dann beispielsweise eine Höhe des Schaums erfassen und die zweite optische Erfassungseinheit kann eine Struktureigenschaft des Schaums erfassen, wie z.B. eine Form von Blasen oder eine Form von Lamellen und/oder eine Größenverteilung der Blasen oder Lamellen.

Gemäß einer vorteilhaften Ausgestaltung der Erfindung ist vorgesehen, dass die Erfassungsvorrichtung eine RADAR-Einheit umfasst. Durch die RADAR-Einheit können Signale ausgesendet werden, welche an der Oberfläche des stehenden Mediums reflektiert und von der RADAR-Einheit empfangen werden. Anhand der Laufzeit des empfangenen Signals kann der Füllstand des stehenden Mediums ermittelt werden. Insofern wird es möglich, Veränderungen des Füllstands des stehenden Mediums durch Schaumbildung in dem stehenden Medium zu ermitteln und ggf. den zeitlichen Verlauf des Füllstands zu erfassen. Die RADAR-Einheit ist bevorzugt derart angeordnet, dass die Oberfläche des stehenden Mediums von oben erfassbar ist. Beispielsweise kann die RADAR-Einheit an einer Oberseite des Behälters angeordnet sein.

Gemäß einer vorteilhaften Ausgestaltung der Erfindung ist vorgesehen, dass die Messdaten eine geometrische Messgröße umfassen, insbesondere eine Höhe des Schaums und/oder eine Fläche des Schaums und/oder ein Volumen des Schaums. Die geometrische Messgröße kann mittels einer optischen Erfassungseinheit und/oder mittels einer RADAR-Einheit ermittelt werden. Bevorzugt wird ein zeitlicher Verlauf der geometrischen Messgröße erfasst, also beispielsweise ein zeitlicher Verlauf einer Höhe des Schaums und/oder einer Fläche des Schaums und/oder eines Volumens des Schaums.

Gemäß einer vorteilhaften Ausgestaltung der Erfindung ist vorgesehen, dass die Messdaten Bilddaten der Schaumstruktur umfassen. Die Bilddaten können mittels einer optischen Erfassungseinheit erfasst werden. Aus den Bilddaten können Messdaten abgeleitet werden, welche strukturelle Eigenschaften des Schaums umfassen, insbesondere eine Form von Blasen oder eine Form von Lamellen und/oder eine Größenverteilung von Blasen oder Lamellen des Schaums. Die Analyse solcher Bilddaten kann - sofern vorhanden - in einer Steuereinrichtung erfolgen, welche ein trainiertes und validiertes System des maschinellen Lernens ist.

Gemäß einer vorteilhaften Ausgestaltung der Erfindung ist vorgesehen, dass die Erfassungsvorrichtung eine Nahinfrarotspektroskopie-Einheit, auch als NIRS-Einheit bezeichnet, umfasst. Mit der Nahinfrarotspektroskopie-Einheit können im infraroten Spektrum aktive Substanzen in dem stehenden Medium erfasst werden. Insbesondere bei als Zuckersäften oder Zuckersirupen ausgebildeten Medien, erlaubt die Analyse mit einer Nahinfrarotspektroskopie-Einheit Rückschlüsse auf die Qualität der Ausgangsmaterialien und damit auch auf die Schaumbildungskapazität der Zuckersäfte und Zuckersirupe.

Ein weiterer Aspekt der **Erfindung** betrifft eine Zuckerproduktionsanlage mit einer Einrichtung, die dazu eingerichtet ist, ein als Zuckersaft oder Zuckersirup oder Schwemmwasser oder Ablauf ausgebildetes strömendes Medium bereitzustellen oder weiterzuverarbeiten, und mit einer Vorrichtung zur automatisierten Zugabe eines Schaumdämpfungsmittels zu dem strömenden Medium wie vorstehend beschrieben.

Bei der Zuckerproduktionsanlage können dieselben technischen Vorteile und Wirkungen erzielt werden, die bereits im Zusammenhang mit der erfindungsgemäßen Vorrichtung zur automatisierten Zugabe eines Schaumdämpfungsmittels beschrieben wurden.

Bei der Zuckerproduktionsanlage kann es sich um eine Zuckerproduktionsanlage, die als Ausgangsstoff Zuckerrüben verwendet handeln, oder um eine Zuckerproduktionsanlage, die als Ausgangsstoff Zuckerrohr verwendet.

Gemäß einer vorteilhaften Ausgestaltung der Erfindung ist vorgesehen, dass die Einrichtung dazu eingerichtet ist, einen Betriebsparameter der Einrichtung, insbesondere eine Temperatur und/oder einen pH-Wert, in Abhängigkeit von den erfassten Messdaten und/oder dem zeitlichen Verlauf der erfassten Messdaten einzustellen. Bei der Einrichtung kann es sich um eine Einrichtung zu Durchführung eines Extraktionsschritts und/oder eine Einrichtung zur Durchführung eines Kalkungsschritts und/oder eine Einrichtung zur Durchführung eines Karbonatisierungsschritts handeln. Ferner ist es möglich, dass die Einrichtung eine Einrichtung zur Durchführung einer Eindickung oder eine Einrichtung zur Durchführung einer Kristallisation ist. Weiterhin ist es möglich, dass die Einrichtung eine Einrichtung zum Rübentransport ist oder dass die Einrichtung eine Einrichtung zur Sulfitation ist.

Alternativ oder zusätzlich zu den vorstehend beschriebenen vorteilhaften Ausgestaltungen könne bei der Zuckerproduktionsanlage auch die im Zusammenhang mit der erfindungsgemäßen Vorrichtung zur automatisierten Zugabe eines Schaumdämpfungsmittels beschriebenen vorteilhaften Merkmale oder Ausgestaltungen, allein oder in Kombination, Anwendung finden.

Ein beispielhaftes Schaumdämpfungsmittel, welches Anwendung in einer Zuckerproduktionsanlage finden kann, ist das unter dem Handelsnamen Antispumin^{®} AZ vertriebene Schaumdämpfungsmittel des Herstellers Solenis. Weitere geeignete Schaumdämpfungsmittel sind die des Herstellers Schill-Seilacher, die unter den folgenden Handelsnamen vertrieben werden: STRUKTOL^{®} SB 2031 N, STRUKTOL^{®} SB 2032, STRUKTOL^{®} SB 2076, STRUKTOL^{®} SB 2080, STRUKTOL^{®} SB 2121, STRUKTOL^{®} SB 2181 A, STRUKTOL^{®} SB 2339, STRUKTOL^{®} SB 2433, STRUKTOL^{®} SB 401, STRUKTOL^{®} SB 404, STRUKTOL^{®} SB 543.

Die **Erfindung** betrifft ferner ein Verfahren zur automatisierten Zugabe eines Schaumdämpfungsmittels zu einem strömenden Medium, insbesondere zu einem strömenden Zuckersaft oder Zuckersirup, wobei ein strömendes Medium in einem Rohrleitungsabschnitt geführt wird, wobei ein Testvolumen des strömenden Mediums in einen mit dem Rohrleitungsabschnitt verbindbaren Behälter eingebracht wird, um ein stehendes Medium in dem Behälter zu erhalten, wobei ein vorgegebenes Volumen eines Gases oder eines Gasgemisches, insbesondere Luft, in das stehende Medium in dem Behälter eingeführt wird, um die Bildung eines Schaums in dem stehenden Medium zu fördern, wobei Messdaten, die den Schaum des stehenden Mediums betreffen durch eine Erfassungsvorrichtung erfasst werden, wobei dem strömenden Medium durch eine Schaumdämpfungsmittel-Zuführeinrichtung in Abhängigkeit von den erfassten Messdaten und/oder einem zeitlichen Verlauf der erfassten Messdaten ein Schaumdämpfungsmittel zugegeben wird.

Bei dem Verfahren können dieselben technischen Vorteile und Wirkungen erzielt werden, die bereits im Zusammenhang mit der erfindungsgemäßen Vorrichtung zur automatisierten Zugabe eines Schaumdämpfungsmittels und der erfindungsgemäßen Zuckerproduktionsanlage beschrieben wurden.

Gemäß einer vorteilhaften Ausgestaltung der Erfindung ist vorgesehen, dass eine Steuereinrichtung, eine Menge des durch die Schaumdämpfungsmittel-Zuführeinrichtung zugeführten Schaumdämpfungsmittels und/oder eine Zusammensetzung des durch die Schaumdämpfungsmittel-Zuführeinrichtung zugeführten Schaumdämpfungsmittels in Abhängigkeit von den erfassten Messdaten und/oder dem zeitlichen Verlauf der erfassten Messdaten einstellt.

Gemäß einer vorteilhaften Ausgestaltung der Erfindung ist vorgesehen, dass die Erfassungsvorrichtung eine optische Erfassungseinheit, insbesondere eine Kamera, umfasst.

Gemäß einer vorteilhaften Ausgestaltung der Erfindung ist vorgesehen, dass die Erfassungsvorrichtung eine RADAR-Einheit umfasst.

Gemäß einer vorteilhaften Ausgestaltung der Erfindung ist vorgesehen, dass die Erfassungsvorrichtung eine Nahinfrarotspektroskopie-Einheit umfasst.

Alternativ oder zusätzlich zu den vorstehend beschriebenen vorteilhaften Ausgestaltungen könne bei dem Verfahren auch die im Zusammenhang mit der erfindungsgemäßen Vorrichtung zur automatisierten Zugabe eines Schaumdämpfungsmittels und/oder der erfindungsgemäßen Zuckerproduktionsanlage beschriebenen vorteilhaften Merkmale oder Ausgestaltungen, allein oder in Kombination, Anwendung finden.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figuren

Die **Fig. 1** zeigt ein Ausführungsbeispiel einer erfindungsgemäßen Vorrichtung zur automatisierten Zugabe eines Schaumdämpfungsmittels zu einem strömenden Medium in einer schematischen Darstellung.
Die Fig. 2 zeigt ein schematisches Blockdiagramm eines Ausführungsbeispiels einer erfindungsgemäßen Zuckerproduktionsanlage.
Die Fig. 3 zeigt ein weiteres Ausführungsbeispiel einer erfindungsgemäßen Vorrichtung zur automatisierten Zugabe eines Schaumdämpfungsmittels zu einem strömenden Medium in einer schematischen Darstellung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

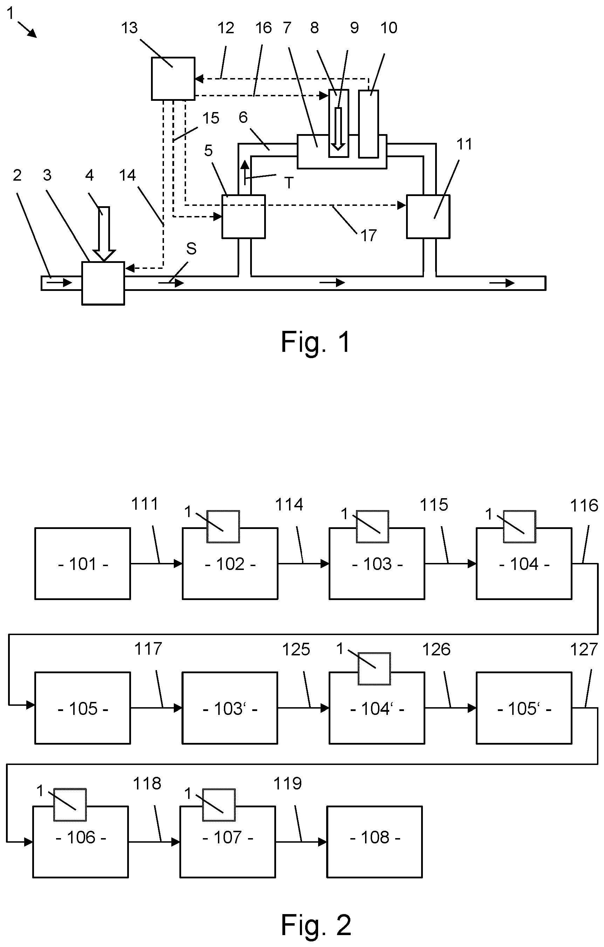

Die Darstellung in Fig. 1 zeigt ein schematisches Blockdiagramm eines Ausführungsbeispiels der erfindungsgemäßen Vorrichtung 1 zur automatisierten Zugabe eines Schaumdämpfungsmittels zu einem strömenden Medium.

Die Vorrichtung 1 umfasst einen Rohrleitungsabschnitt 2, in welchem ein strömendes Medium geführt wird. Die Strömungsrichtung S des Mediums ist mit dem Bezugszeichen S gekennzeichnet. Der Rohrleitungsabschnitt 2 kann Teil einer industriellen Anlage sein und ein in der Anlage verarbeitetes oder erzeugten Produkt oder Zwischenprodukt führen. Sofern es sich bei der Anlage um eine Zuckerproduktionsanlage handelt, kann das Medium beispielsweise ein Zuckersaft, wie z.B. ein Rohsaft, Dünnsaft oder Dicksaft oder ein Ablauf, oder ein Zuckersirup oder ein Schwemmwasser sein.

In dem Rohrleitungsabschnitt 2 ist eine Schaumdämpfungsmittel-Zuführeinrichtung 3 vorgesehen, über welche dem strömenden Medium ein Schaumdämpfungsmittel 4 zugegeben werden kann, um die Schaumbildung in dem strömenden Medium zu beeinflussen, bevorzugt zu unterdrücken. Die Schaumdämpfungsmittel-Zuführeinrichtung 3 kann über eine Steuereinrichtung 13 angesteuert werden. Hierzu ist die Schaumdämpfungsmittel-Zuführeinrichtung 3 mit der Steuereinrichtung 13 über eine Steuerleitung 14 verbunden.

Um die automatisierte Dosierung des Schaumdämpfungsmittels 4 zu dem strömenden Medium zu ermöglichen, ist an dem Rohrleitungsabschnitt 2 ein Bypass vorgesehen. Dieser Bypass umfasst eine Bypass-Leitung 6, einen Behälter 7, welcher mit dem Rohrleitungsabschnitt 2 über die Bypass-Leitung 6 sowie ein steuerbares Ventil 5 als Zulaufventil 5 und optional ein weiteres steuerbares Ventil 11 als Ablaufweg verbunden ist. Diese steuerbaren Ventile 5, 11 sind über entsprechende Steuerleitungen 15, 17 mit der Steuereinrichtung 13 verbunden, so dass die Steuereinrichtung 13 ansteuern kann, um die Ventile 6, 11 unabhängig voneinander zu öffnen und zu schließen.

Bei geöffnetem Ventil 5 ist der Behälter 7 derart mit dem Rohrleitungsabschnitt 2 verbunden, dass ein Testvolumen des strömenden Mediums in den Behälter 7 eingebracht werden kann. Das Einbringen des Mediums erfolgt über die Bypass-Leitung 6 in der mit dem Bezugszeichen T bezeichneten Strömungsrichtung. Durch das anschließende Schließen des Ventils 5 und ggf. des Ventils 11 kann der Behälter 7 fluidisch von dem Rohrleitungsabschnitt 2 isoliert werden. In dem Behälter 7 kann folglich ein stehendes Medium erhalten werden.

Das Testvolumen des Mediums, welches in dem Behälter 7 als stehendes Medium isoliert ist, wird nachfolgend herangezogen, um eine Schaumkontrolle durchzuführen, also um zu ermitteln, ob das dem strömenden Medium zugeführte Schaumdämpfungsmittel 4 ausreichend wirkt, um die Schaumbildung in dem Rohrleitungsanschnitt 2 in einem akzeptablen Bereich zu halten. Hierzu wird mittels einer Gaszuführeinrichtung 8 ein vorgegebenes Volumen eines Gases oder eines Gasgemisches 9, beispielsweise Luft, in das stehende Medium in dem Behälter 7 eingeführt. Diese Zufuhr fördert die Bildung eines Schaums in dem stehenden Medium. Die Zufuhr des Gases bzw. Gasgemisches kann über eine Steuerleitung 16, welche die Gaszuführeinrichtung 8 mit der Steuereinrichtung 13 verbindet, durch die Steuereinrichtung 13 gesteuert werden.

Vor dem Beginn der Zufuhr des Gases oder Gasgemisches und während dieser Zufuhr werden durch eine Erfassungseinrichtung 10 Messdaten 12 erfasst, welche den Schaum des stehenden Mediums betreffen. Die Erfassungseinrichtung 10 kann beispielsweise eine Erfassungseinheit, insbesondere Kamera, und eine RADAR-Einheit aufweisen.

Die optische Erfassungseinheit der Erfassungseinrichtung 10 kann seitlich des stehenden Mediums angeordnet sein, beispielsweise hinter einem transparenten Bereich des Behälters 7, wie z.B. einem Fenster. Auf diese Weise kann eine Querschnittsansicht des in dem Behälter 7 stehen Mediums parallel zu einer Oberfläche des Mediums erfasst werden. Die optische Erfassungseinheit kann eine anfängliche Höhe des Schaums vor dem Eintrag des Gases bzw. Gasgemisches erfassen und einen zeitlichen Verlauf der Veränderung, insbesondere Zunahme, der Höhe des Schaums bzw. des Volumens des Schaums während dem Eintrag des Gases bzw. Gasgemisches. Ferner kann die optische Erfassungseinheit eine Schaumstruktur des Schaums, also beispielsweise eine Form und/oder Größenverteilung von Blasen und/oder eine Dicke von Schaumlamellen erfassen. Zur Bildanalyse kann ein der Steuereinrichtung 13 implementiertes, trainiertes und validiertes System des maschinellen Lernens verwendet werden, also ein trainiertes und validiertes Bilderkennungsmodell.

Die RADAR-Einheit der Erfassungseinrichtung 10 ist bevorzugt derart oberhalb des stehenden Mediums angeordnet, dass eine Füllstandserfassung erfolgen kann. Somit wird es möglich, Veränderungen des Füllstands des stehenden Mediums durch Schaumbildung in dem stehenden Medium zu ermitteln und ggf. den zeitlichen Verlauf des Füllstands zu erfassen.

Die durch die der Erfassungseinrichtung 10 erfassten Messdaten werden der Steuereinrichtung 13 über eine Datenleitung 12 bereitgestellt. Die Steuereinrichtung 13 ist dazu eingerichtet, in Abhängigkeit der durch die Erfassungseinrichtung 10 erfassten Messdaten bzw. deren zeitlichem Verlauf eine Menge und/oder eine Zusammensetzung des durch die Schaumdämpfungsmittel-Zuführeinrichtung 3 zugeführten Schaumdämpfungsmittels 4 einzustellen.

Die Erfassungsvorrichtung 10 kann optional zusätzlich eine Nahinfrarotspektroskopie-Einheit umfassen. Eine solche Nahinfrarotspektroskopie-Einheit kann zur Bestimmung von im infraroten Spektrum aktiven Substanzen in dem Testvolumen eingesetzt werden. Beispielsweise kann eine Konzentration von Zuckern und Nichtzuckern ermittelt werden und dadurch Rückschlüsse auf die Schaumbildungskapazität des Mediums gezogen werden. Alternativ kann eine Nahinfrarotspektroskopie-Einheit nicht als Teil der Erfassungsvorrichtung 10 an dem Behälter 7 sondern an dem Rohrleitungsabschnitt 2 angeordnet sein, um eine Messung unmittelbar an dem strömenden Medium vorzunehmen.

Die in Fig. gezeigte Vorrichtung 1 ermöglicht eine effiziente Hemmung der Schaumbildung in strömenden Medien, insbesondere bei der Zuckerproduktion, auch unter variierenden Bedingungen.

Die **Fig. 2** zeigt schematisch ein Ablaufdiagramm der Vorgänge in einer Zuckerproduktionsanlage gemäß einem ersten Ausführungsbeispiel der Erfindung. Die Zuckerproduktionsanlage umfasst zur Durchführung einzelner Prozessschritte 101-108 mehrere Einrichtungen, die einen Zuckersaft oder Zuckersirup als strömendes Medium bereitzustellen oder weiterzuverarbeiten. In einigen diesen Prozessschritten 101-108 zugeordneten Einrichtungen kann eine Vorrichtung 1 zur automatisierten Zugabe eines Schaumdämpfungsmittels zu dem strömenden Medium zur Anwendung kommen, beispielsweise wie im Zusammenhang mit Fig. 1 erläutert. Diese Prozessschritte 102, 103, 104, 104', 106, 107 sind in der Darstellung in Fig. 1 als mögliche Anwendungsbereiche der Vorrichtung 1 markiert.

Bei dem Ausführungsbeispiel nach Fig. 2 werden als Ausgangsstoff Zuckerrüben verwendet. Bei dem in Fig. 2 nicht gezeigten Transport der Zuckerrüben, beispielsweise von einer Deponie in die Zuckerproduktionsanlage, kann ein Nasstransport mit Schwemmwasser zur Anwendung kommen. Das Schwemmwasser kann in Schwemmrinnen und/oder Rohrleitungen, insbesondere in einem Kreislauf, geführt sein. In dem Schritt der Nasstransports kann eine Vorrichtung 1 zur automatisierten Zugabe eines Schaumdämpfungsmittels zu dem strömenden Medium zur Anwendung kommen. Das Schwemmwasser kann einer Kläranlage zugeführt werden, in welcher ebenfalls eine Vorrichtung 1 zur automatisierten Zugabe eines Schaumdämpfungsmittels zu dem strömenden Medium zur Anwendung kommen kann.

Die in der Zuckerproduktionsanlage angelieferten Zuckerrüben werden bevorzugt zunächst gereinigt, also von Anhaftungen, wie beispielsweise Erde, Sand oder Blättern befreit. In einem ersten Verfahrensschritt des Schneidens 101 werden die Zuckerrüben durch eine Schneidemaschine zerkleinert, um Zuckerrübenschnitzel 111 zu erhalten.

Die Zuckerrübenschnitzel 111 werden in einem dem Schneiden 101 nachfolgenden Verfahrensschritt der Extraktion 102 oder Saftgewinnung in einer Extraktionseinrichtung durch Wasser ausgelaugt. Optional können die Zuckerrübenschnitzel 111 zunächst vorgewärmt werden, beispielsweise in einem Bereich von 60 °C bis 80 °C, um die Zellwände durchlässiger zu machen. Die eigentliche Extraktion 102 erfolgt in einem Gegenstromverfahren, bei welchem die Zuckerrübenschnitzel 111 im Gegenstrom zu heißem Wasser durch die Extraktionseinrichtung gefördert bzw. geleitet werden. Als Produkt der Extraktion 10 wird neben Zuckerrübenschnitzelresten der Rohsaft 114 erhalten, welcher fast den gesamten in den Zuckerrüben enthaltenen Zucker enthält.

Gemäß einer Abwandlung des Ausführungsbeispiels kann als Ausgangsstoff Zuckerrohr verwendet werden. Das Zuckerrohr wird dabei zunächst geschnitten und kann dann ebenfalls einem Extraktionsschritt 102 zugeführt werden, um Rohsaft 114 mit einem Diffusionsprozess zu extrahieren. Alternativ kann der Rohsaft durch Pressextration - also durch Pressen des Zuckerrohrs bzw. der Zuckerrohrschnitzel erhalten werden.

Dem Rohsaft 114 wird in einem Verfahrensschritt der Kalkung 103 Kalk in Form von Kalkmilch zugesetzt. Der Kalk bindet in dem Rohsaft 114 enthaltene Nichtzuckerstoffe. Säuren werden neutralisiert und der pH-Wert angehoben.

In dem anschließenden Verfahrensschritt der Karbonatisierung 104 wird Kohlendioxid in die Mischung 115 aus Rohsaft und Kalkmilch eingeleitet. Calcium und andere Nichtzuckerstoffe werden gebunden und fallen als Kalk (Calciumcarbonat) aus. In den anschließenden Verfahrensschritt der Filtration 105 wird der Kalk dann abgetrennt und es verbleibt der Dünnsaft 117. Die Verfahrensschritte der Kalkung 103, Karbonatisierung 104 und Filtration 105 werden zusammen auch aus Saftreinigung bezeichnet. Die Schritte Kalkung 103, Karbonatisierung 104 und Filtration 105 können optional in dieser Reihenfolge mehrmals, beispielsweise zweimal, hintereinander durchgeführt werden, um das Reinigungsergebnis zu verbessern. Dabei wird dem ersten Dünnsaft 117 in einem zweiten Kalkungsschritt 103' Kalkmilch zugegeben, um eine Mischung aus erstem Dünnsaft und Kalkmilch 125 zu erhalten. Dieser Mischung aus erstem Dünnsaft und Kalkmilch 125 wird dann in einem zweiten Karbonatisierungsschritt 104' Kohlendioxid und bevorzugt Soda bzw. Natronlauge zugegeben, um die Mischung aus erstem Dünnsaft und Kalkmilch 125 zu enthärten und eine Mischung aus erstem Dünnsaft und ausgefällten Nichtzuckerstoffen 126 zu erhalten. Diese Mischung aus erstem Dünnsaft und ausgefällten Nichtzuckerstoffen 126 wird dann in einem zweiten Filtrierungsschritt 105' gefiltert, so dass ein zweiter Dünnsaft 127 erhalten wird. Der zweite Filtrierungsschritt 105' ist dabei bevorzugt mehrstufig, beispielsweise zweistufig, ausgebildet. Die hier beschriebene Saftreinigung bezieht sich auf die Zuckerherstellung ausgehend von Zuckerrüben. Sofern Zuckerrohr als Ausgangsstoff verwendet wird, kann die Saftreinigung abweichend erfolgen. Entsprechende Verfahren sind dem Fachmann beispielsweise aus Peter Rain, Cane Sugar Engineering, 2nd edition, 2017, ISBN 978-3-87040-167-2.

Daran schließt sich der Verfahrensschritt der Eindickung 106 an, in welchem der Dünnsaft 117, 127 in einem meist mehrstufigen Erwärmungsprozess, insbesondere Verdampfungsprozess, eingedickt wird, um den Dicksaft 118 zu erhalten.

Aus dem Dicksaft 118 wird in einem Verfahrensschritt der Kristallisation 107 in einem Verdampfungskristallisator mittels Heizdampf und im Unterdruck Zucker auskristallisiert. Die Kristallisation 107 umfasst bevorzugt mehrere aufeinanderfolgende Kristallisationsschritte. Erhalten wird eine Kristallsuspension 119.

Schließlich wird in einem in einem Verfahrensschritt des Trennens 108, beispielsweise in einer Zentrifuge, der Kristallzucker vom Ablauf, also der Mutterlauge, abgetrennt. Die beschriebene Art und Weise der Kristallisation kann sowohl zur Zuckerproduktion ausgehend von Zuckerrüben als auch ausgehend von Zuckerrohr Anwendung finden.

Die erfindungsgemäße Vorrichtung 1 zur automatisierten Zugabe eines Schaumdämpfungsmittels 4 zu dem strömenden Medium kann beispielsweise im Saftgewinnungsprozess, also bei der Extraktion 102 des Rohsafts 114 zur Anwendung kommen. Hierbei kann das Schaumdämpfungsmittel 4 dem Rohsaft 114 als strömendem Medium zugegeben werden. Alternativ oder zusätzlich kann eine solche Vorrichtung 1 zur automatisierten Zugabe eines Schaumdämpfungsmittels 4 im Saftreinigungsprozess Anwendung finden, beispielsweise bei der Vorkalkung 103 und der Karbonatisierung 104, 104'. Hierbei kann das Schaumdämpfungsmittel 4 der Mischung aus Rohsaft und Kalkmilch 115 und/oder der Mischung aus Rohsaft und ausgefällten Nichtzuckerstoffen 116 als strömendem Medium zugegeben werden. Weiter alternativ oder zusätzlich kann eine solche Vorrichtung 1 zur automatisierten Zugabe eines Schaumdämpfungsmittels 4 in der Eindickung 106 der Zuckersäfte zu Zuckersirupen und der Kristallisation 107 des Zuckersirups finden. Hierbei kann das Schaumdämpfungsmittel 4 dem Dicksaft 118 und/oder der Kristallsuspension 119 zugegeben werden.

Zusätzlich zu der Dosierung des Schaumdämpfungsmittels 4 kann die jeweilige Einrichtung der Zuckerproduktionsanlage auch dazu eingerichtet sein, einen Betriebsparameter der Einrichtung, insbesondere eine Temperatur und/oder einen pH-Wert, in Abhängigkeit von den durch die Vorrichtung 1 erfassten Messdaten und/oder dem zeitlichen Verlauf der erfassten Messdaten einzustellen.

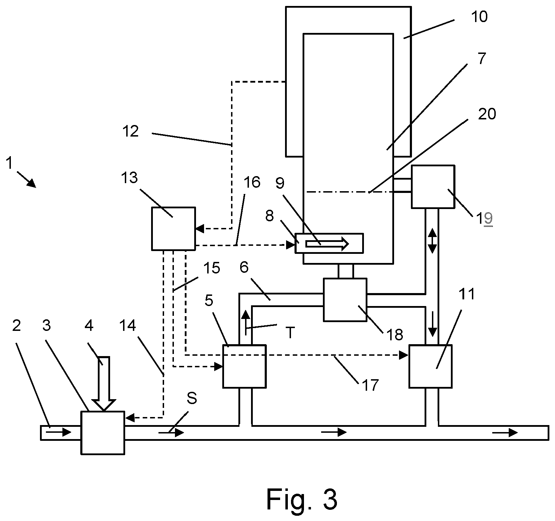

Die Darstellung in **Fig. 3** zeigt ein schematisches Blockdiagramm eines weiteren Ausführungsbeispiels der erfindungsgemäßen Vorrichtung 1 zur automatisierten Zugabe eines Schaumdämpfungsmittels zu einem strömenden Medium.

Die Vorrichtung 1 gemäß diesem Ausführungsbeispiel entspricht im Wesentlichen der Vorrichtung 1 gemäß dem ersten Ausführungsbeispiel. Elemente mit ähnlicher Funktion sind mit identischen Bezugszeichen beziffert. Hinsichtlich dieser Elemente wird auf die Erläuterungen zu dem ersten Ausführungsbeispiel verwiesen.

Im Unterschied zu dem ersten Ausführungsbeispiel ist in der Bypass-Leitung 6 ein Drei-Wege-Ventil 18 vorgesehen, welches die Bypass-Leitung 6 mit einer Auslauföffnung des Behälters 7 verbindet, welcher im Bereich des Bodens des Behälters 7 angeordnet ist. Das Der-Wege-Ventil 18 kann durch die Steuereinrichtung 13 angesteuert werden und verbindet wahlweise eine der beiden Seiten der Bypass-Leitung 6 mit der Auslauföffnung des Behälters 7 oder verbindet die beiden Seiten der Bypass-Leitung 6 miteinander, so dass die Auslauföffnung des Behälters 7 verschlossen ist. Ein weiterer Bestandteil der Vorrichtung 1 gemäß diesem Ausführungsbeispiel ist ein steuerbares Ventil 19, welches die Bypass-Leitung 6 wahlweise mit einer Einlassöffnung des Behälters 7 verbindet, welche oberhalb der Auslaus-öffnung des Behälters angeordnet ist.

Beim Einbringen eines Testvolumens des strömenden Mediums in den Behälter 7 werden die Ventile 5, 18, 11, 19 derart eingestellt, dass das Medium aus dem Rohleitungsabschnitt 2 durch die Einlauföffnung und/oder die Auslauföffnung des Behälters in den Behälter strömt bis ein Füllniveau 20 in der Höhe der Auslauföffnung erreicht ist. Dieses Füllniveau kann ein Referenzniveau für die nachfolgende Messung bilden. Im nächsten Schritt wird Einlauföffnung verschlossen, beispielsweise durch entsprechende Einstellung des Drei-Wege-Ventils 18. Insofern wird der Behälter 7 fluidisch von dem Rohrleitungsabschnitt 2 isoliert und ein stehendes Medium im Behälter 7 erhalten.

Dann wird durch die Gaszuführeinrichtung 8 ein Gas oder Gasgemisch 9 in das stehende Medium in dem Behälter 7 eingebracht. Da diese im Bereich zwischen der Auslauföffnung und der Einlauföffnung angeordnet ist, kann das Gas in das Volumen des stehenden Mediums eingebracht werden.

Die Erfassung der Messdaten 12 durch die Erfassungsvorrichtung 10 erfolgt wie im Zusammenhang mit Fig. 1 beschrieben.

### Bezugszeichenliste

- 1: Vorrichtung zur automatisierten Zugabe eines Schaumdämpfungsmittels
- 2: Rohrleitung
- 3: Schaumdämpfungsmittel-Zuführeinrichtung
- 4: Schaumdämpfungsmittel
- 5: steuerbares Ventil
- 6: Bypass-Leitung
- 7: Behälter
- 8: Gaszuführeinrichtung
- 9: Gas oder Gasgemisch
- 10: Erfassungseinrichtung
- 11: steuerbares Ventil
- 12: Datenleitung
- 13: Steuereinrichtung
- 14: Steuerleitung
- 15: Steuerleitung
- 16: Steuerleitung
- 17: Steuerleitung
- 18: Drei-Wege-Ventil
- 19: steuerbares Ventil
- 20: Füllniveau
- 101: Verfahrensschritt "Schneiden"
- 102: Verfahrensschritt "Extraktion"
- 103, 103': Verfahrensschritt "Kalkung"
- 104, 104': Verfahrensschritt "Karbonatisierung" (2 stufig)
- 105, 105': Verfahrensschritt "Filtration"
- 106: Verfahrensschritt "Eindickung"
- 107: Verfahrensschritt "Kristallisation"
- 108: Verfahrensschritt "Trennen"
- 111: Zuckerrübenschnitzel
- 114: Rohsaft
- 115: Mischung aus Rohsaft und Kalkmilch
- 116: Mischung aus Rohsaft und ausgefällten Nichtzuckerstoffen
- 117: Dünnsaft
- 118: Dicksaft
- 119: Kristallsuspension (Ablauf und Kristallzucker)
- 125: Mischung aus Dünnsaft und Kalkmilch
- 126: Mischung aus Dünnsaft und ausgefällten Nichtzuckerstoffen
- 127: Dünnsaft

- S: Strömungsrichtung
- T: Strömungsrichtung

## Patentansprüche

1. Vorrichtung (1) zur automatisierten Zugabe eines Schaumdämpfungsmittels (4) zu einem strömenden Medium, insbesondere zu einem strömenden Zuckersaft oder Zuckersirup, aufweisend
einen Rohrleitungsabschnitt (2) zum Führen des strömenden Mediums, einen mit dem Rohrleitungsabschnitt (2) verbindbaren Behälter (7), in welchen ein Testvolumen des strömenden Mediums einbringbar ist, um in dem Behälter (7) ein stehendes Medium zu erhalten,
eine Gaszuführeinrichtung (8), durch welche ein vorgegebenes Volumen eines Gases oder eines Gasgemisches (9), insbesondere Luft, in das stehende Medium in dem Behälter (7) einführbar ist, um die Bildung eines Schaums in dem stehenden Medium zu fördern,
eine Erfassungseinrichtung (10) zum Erfassen von Messdaten (12), die den Schaum des stehenden Mediums betreffen,
eine Schaumdämpfungsmittel-Zuführeinrichtung (3) zum Zuführen eines Schaumdämpfungsmittels (4) zu dem strömenden Medium in Abhängigkeit von den erfassten Messdaten (12) und/oder einem zeitlichen Verlauf der erfassten Messdaten (12).

2. Vorrichtung nach Anspruch 1, **dadurch gekennzeichnet, dass** der Rohrleitungsabschnitt (2) mit dem Behälter (7) über ein steuerbares Ventil (5) verbunden ist und das steuerbare Ventil (5) derart zwischen der Schaumdämpfungsmittel-Zuführeinrichtung (3) und dem Behälter (7) angeordnet ist, dass strömendes Medium, welches die Schaumdämpfungsmittel-Zuführeinrichtung (7) passiert hat, bei geöffnetem Ventil (5) in den Behälter (7) geführt werden kann.

3. Vorrichtung nach einem der vorhergehenden Ansprüche, **gekennzeichnet durch** eine Steuereinrichtung (13), die dazu eingerichtet ist, eine Menge des durch die Schaumdämpfungsmittel-Zuführeinrichtung (3) zugeführten Schaumdämpfungsmittels und/oder eine Zusammensetzung des durch die Schaumdämpfungsmittel-Zuführeinrichtung (3) zugeführten Schaumdämpfungsmittels (4) in Abhängigkeit von den erfassten Messdaten (12) und/oder dem zeitlichen Verlauf der erfassten Messdaten (12) einzustellen.

4. Vorrichtung nach einem der vorhergehenden Ansprüche, **dadurch gekennzeichnet, dass** die Erfassungsvorrichtung (10) eine optische Erfassungseinheit, insbesondere eine Kamera, umfasst.

5. Vorrichtung nach einem der vorhergehenden Ansprüche, **dadurch gekennzeichnet, dass** die Erfassungsvorrichtung (10) eine RADAR-Einheit umfasst.

6. Vorrichtung nach einem der vorhergehenden Ansprüche, **dadurch gekennzeichnet, dass** die Messdaten eine geometrische Messgröße umfassen, insbesondere eine Höhe des Schaums und/oder eine Fläche des Schaums und/oder ein Volumen des Schaums.

7. Vorrichtung nach einem der vorhergehenden Ansprüche, **dadurch gekennzeichnet, dass** die Messdaten Bilddaten der Schaumstruktur umfassen.

8. Vorrichtung nach einem der vorhergehenden Ansprüche, **dadurch gekennzeichnet, dass** die Erfassungsvorrichtung (10) eine Nahinfrarotspektroskopie-Einheit umfasst.

9. Zuckerproduktionsanlage mit einer Einrichtung, die dazu eingerichtet ist, ein als Zuckersaft (114-127) oder Zuckersirup oder Schwemmwasser oder Ablauf ausgebildetes strömendes Medium bereitzustellen oder weiterzuverarbeiten, **gekennzeichnet durch** eine Vorrichtung zur automatisierten Zugabe eines Schaumdämpfungsmittels (4) zu dem strömenden Medium nach einem der vorhergehenden Ansprüche.

10. Zuckerproduktionsanlage nach Anspruch 9, wobei die Einrichtung dazu eingerichtet ist, einen Betriebsparameter der Einrichtung, insbesondere eine Temperatur und/oder einen pH-Wert, in Abhängigkeit von den erfassten Messdaten und/oder dem zeitlichen Verlauf der erfassten Messdaten einzustellen.

11. Verfahren zur automatisierten Zugabe eines Schaumdämpfungsmittels (4) zu einem strömenden Medium, insbesondere zu einem strömenden Zuckersaft oder Zuckersirup,
wobei ein strömendes Medium in einem Rohrleitungsabschnitt (2) geführt wird,
wobei ein Testvolumen des strömenden Mediums in einen mit dem Rohrleitungsabschnitt (2) verbindbaren Behälter (7) eingebracht wird, um ein stehendes Medium in dem Behälter (7) zu erhalten,
wobei ein vorgegebenes Volumen eines Gases oder eines Gasgemisches (9), insbesondere Luft, in das stehende Medium in dem Behälter (7) eingeführt wird, um die Bildung eines Schaums in dem stehenden Medium zu fördern,
wobei Messdaten, die den Schaum des stehenden Mediums betreffen durch eine Erfassungsvorrichtung (10) erfasst werden,
wobei dem strömenden Medium durch eine Schaumdämpfungsmittel-Zuführeinrichtung (3) in Abhängigkeit von den erfassten Messdaten und/oder einem zeitlichen Verlauf der erfassten Messdaten ein Schaumdämpfungsmittel (4) zugegeben wird.

12. Verfahren nach Anspruch 11, **dadurch gekennzeichnet, dass** eine Steuereinrichtung (13), eine Menge des durch die Schaumdämpfungsmittel-Zuführeinrichtung (3) zugeführten Schaumdämpfungsmittels und/oder eine Zusammensetzung des durch die Schaumdämpfungsmittel-Zuführeinrichtung (3) zugeführten Schaumdämpfungsmittels (4) in Abhängigkeit von den erfassten Messdaten (12) und/oder dem zeitlichen Verlauf der erfassten Messdaten (12) einstellt.

13. Verfahren nach einem der Ansprüche 11 oder 12, **dadurch gekennzeichnet, dass** die Erfassungsvorrichtung (10) eine optische Erfassungseinheit, insbesondere eine Kamera, umfasst.

14. Verfahren nach einem der Ansprüche 11 bis 13, **dadurch gekennzeichnet, dass** die Erfassungsvorrichtung (10) eine RADAR-Einheit umfasst.

15. Verfahren nach einem der Ansprüche 11 bis 14, **dadurch gekennzeichnet, dass** die Erfassungsvorrichtung eine Nahinfrarotspektroskopie-Einheit umfasst.
